# EUROPÄISCHE PATENTANMELDUNG

(11) **EP 0 648 408 A1**
(43) Veröffentlichungstag der Anmeldung: **19.04.1995**
(21) Anmeldenummer: 94116424.6
(22) Anmeldetag: 18.10.1994
(51) Int. Cl.: A01D 78/10

(54) **Heuwerbungsmaschine**

(30) Priorität: 18.10.1993 DE 9315877 U
(71) Anmelder: GREENLAND GMBH & CO. KG, D-78244 Gottmadingen (DE)
(72) Erfinder: Maier, Martin, D-78244 Gottmadingen (DE)
(74) Vertreter: Grünecker, Kinkeldey, Stockmair & Schwanhäusser Anwaltssozietät

(57) **Zusammenfassung**

Eine Heuwerbungsmaschine (M), insbesondere ein Kreiselschwader, für Frontanbau, weist ein Maschinengestell auf, an dem ein Laufräder-Fahrwerk und wenigstens ein drehantreibbarer Werkzeugkreisel (1) vorgesehen sind. Ein die Maschine führender Tragrahmen (G) ist aus eine abgesenkten Arbeitslage mittels eines Zugelements (Z) um eine bodenparallele Querachse (9) an einer Dreipunkt-Fronthalterung (F) eines Schleppers (S) hochschwenkbar. Zwischen dem freien Ende des Tragrahmens (G) und der Maschine ist wenigstens eine zur Querachse parallele Maschinenachse (8) vorgesehen, um die die Maschine relativ zum Tragrahmen begrenzt schwenkbar ist. Die Maschine (M) ist in Fahrtrichtung vorn relativ zum Tragrahmen (G) um die Maschinenachse (8) nach oben anstellbar, und zwar mittels eines zwischen dem Tragrahmen (G) und der Maschine (M) mittels des Zugelementes (Z) betätigbaren, formschlüssigen Zwangsschwenkmechanismus (B).

## Beschreibung

Die Erfindung betrifft eine Heuwerbungsmaschine der im Oberbegriff des Patentanspruchs 1 angegebenen Art.

Bei derartigen, aus EP 0 362 670 und DE-A-28 33 814 bekannten Heuwerbungsmaschinen für Frontanbau ist der Schwerpunkt der Maschine in Fahrtrichtung hinter die Maschinenachse gesetzt, damit beim Anheben des Tragrahmens aus der Arbeitslage die Maschine um die Maschinenachse nach hinten kippt und die Vorderseite des Werkzeugkreisels nach oben angestellt wird. Wird nämlich die Maschine am Feldrand angehoben, dann sollen die Werkzeuge vorne rasch außer Bodeneingriff kommen, um nicht zu graben oder zu kratzen. Allerdings be- oder verhindert bei den bekannten Heuwerbungsmaschinen manchmal der variierende Schiebewiderstand der Antriebswelle oder der Widerstand der Werkzeuge am Boden die schwerkraftbedingte Anstellbewegung. Dann besteht die Gefahr eine Beschädigung. Bei der Heuwerbungsmaschine gemäß DE-A-28 33 814 ist sogar zusätzlich zwischen dem Tragrahmen und der Maschine eine Zugfeder für diesen Zweck vorgesehen. Die Feder gewährleistet allerdings nicht unter allen Betriebsbedingungen die gewünschte Anstellbewegung. Außerdem ist es bei beiden bekannten Heubwerbungsmaschinen erforderlich, zum Anstellen der Maschine an der Vorderseite zuerst den Tragrahmen anzuheben und die Bodenlaufräder zu entlasten oder gänzlich vom Boden abzuheben. Ein weiterer Nachteil besteht darin, daß in der angehobenen Transportstellung die Maschine relativ zum Tragrahmen Schwenkbewegungen um die Maschinenachse ausführt, die unerwünscht sind.

Der Erfindung liegt die Aufgabe zugrunde, eine Heuwerbungsmaschine der eingangs genannten Art zu schaffen, bei der die Anstellbewegung der Maschine auf baulich einfache Weise zuverlässig einsteuerbar ist, und bei der in der Transportlage eine stabile Maschinenposition erreichbar ist.

Die gestellte Aufgabe wird erfindungsgemäß mit den im Patentanspruchs 1 enthaltenen Merkmalen gelöst.

Bei dieser baulich einfachen Ausbildung wird das Vorderende der Maschine mittels des Zwangsschwenkmechanismus zwangsweise umgestellt, und zwar auch dann, wenn der Schiebewiderstand der Antriebswelle gerade hoch sein sollte oder die Werkzeuge und/oder die Bodenlaufräder noch Bodenkontakt haben. Ein Anheben des vorderen Endes des Tragrahmens ist dabei nicht erforderlich. Erst nachdem die Maschine vorne nach oben angestellt ist, kann - falls erforderlich - auch der Tragrahmen gehoben werden. Der Schlepperfahrer kann die Anstellung der Maschine rasch und genau steuern, was ,z.B. bei Annäherung an den Feldrand, wichtig ist. Mittels des Zwangsschwenkmechanismus ist die Maschine auch in der Transportlage bei hochgeschwenktem Tragrahmen einfach stabil am Tragrahmen festlegbar, ohne dann noch freie Schwing- oder Pendelbewegungen auszuführen.

Bei der Ausführungsform gemäß Anspruch 2 läßt sich der Anstellhub der Maschine genau vorbestimmen. In der Praxis reicht ein Kippwinkel bis ca. 10° aus. Ist ein dreirädriges Fahrwerk vorgesehen, dann kippt die Maschine, z.B. um das oder die in Fahrtrichtung hinteren Laufräder hoch, ohne daß diese aus dem Bodenkontakt gelöst zu werden bräuchten.

Bei der Ausführungsform gemäß Anspruch 3 wird die Maschine mittels der Schlepperhydraulik über die Dreipunkthaltevorrichtung angestellt.

Bei der Ausführungform gemäß Anspruch 4 wird die Anstellbewegung mit dem Arbeitszylinder erzeugt, der gegebenenfalls auch für das Einstellen der Transportlage nutzbar ist. Die Dreipunkt-Hebevorrichtung braucht nicht betätigt zu werden.

Bei der Ausführungsform gemäß Anspruch 5 wird zum Anstellen der Maschine entweder die Schlepperhydraulik mit der Dreipunkt-Hebevorrichtung und/oder der Arbeitszylinder eingesetzt. Es ist denkbar, die beiden Stellvorrichtungen in Kombination einzusetzen.

Eine baulich einfache, funktionssichere und zweckmäßige Ausführungsform geht aus Anspruch 6 hervor. Die Reaktionskräfte aus der Anstellbewegungen der Maschine werden über die Achse des Hebels auf den Tragrahmen übertragen.

Bei der Ausführungsform gemäß Anspruch 7 ist die Maschine nach der Anstellung mit dem Tragrahmen verblockt. Die Schwenkbegrenzung bildet auch eine deutliche Anzeige für das Ende der Anstellbewegung. Beim weiteren Anheben des Tragrahmens wird die Maschinen zusammen mit diesem und mit diesem verblockt bewegt.

Bei der Ausführungsform gemäß Anspruch 8 ist eine genau vorherbestimmbare Übersetzung des Bewegungsspiels in den Schwenkhub der Maschine vorgesehen, um das Vorderende der Maschine zügig anzustellen.

Eine robuste und baulich einfache Ausführungsform geht aus Anspruch 9 hervor. Gegebenenfalls hohe Kräfte werden großflächig und klemmungsfrei übertragen. Die Maschine ist in der Arbeitslage und nach der Anstellung wie auch in der Transportlage jeweils stabil am Tragrahmen abgestützt.

Bei der Ausführungsform gemäß Anspruch 10 wird in der Führungskulisse eine verschleißarme Führung bewirkt. Die Kraftüberleitung vom Zugelement auf den Zwangsschwenkmechanismus gestaltet sich verlustarm.

Eine stabile Konstruktion des Zwangsschwenkmechanismus geht aus Anspruch 11 hervor, weil aufgrund der doppelten Ausbildung seitliche Kräfte problemlos und verklemmungsfrei aufgenommen werden, was bei schrägem Boden wichtig ist.

Bei der Ausführungsform gemäß Anspruch 12 wird die Maschine über das Rohr mit günstigem Hebelarm verschwenkt.

Bei der Ausführungsform gemäß Anspruch 13 ergeben sich günstige Hebelverhältnisse für die Anstellbewegung und auch zum Blockieren der Maschine in der Transportlage.

Bei der Ausführungsform gemäß Anspruch 14 wird durch die Lage des Schwerpunktes das Anstellen der Maschine begünstigt, weil das Gewicht der Maschine deren Anstellung unterstützt.

Bei der Ausführungsform gemäß Anspruch 15 wird nach dem Anstellen der Maschine die Zugkraft zum weiteren Ausheben der Maschine mit dem Tragrahmen statisch günstig übertragen.

Die Ausführungsform gemäß Anspruch 16 ist baulich einfach, funktionssicher und hoch belastbar.

Bei der Ausführungsform gemäß Anspruch 17 gelangen die beiden Begrenzungsvorrichtungen in etwa synchron zum Eingriff, so daß sich eine sehr stabile Lage der Maschine am Tragrahmen ergibt.

Bei der Ausführungsform gemäß Anspruch 18 ist dem Zwangsschwenkmechanismus zusätzlich die Aufgabe der Verblockung der Maschine mit dem Tragrahmen in der Transportlage zugewiesen.

Anhand der Zeichnung wird eine Ausführungsform der Erfindung erläutert. Es zeigen:

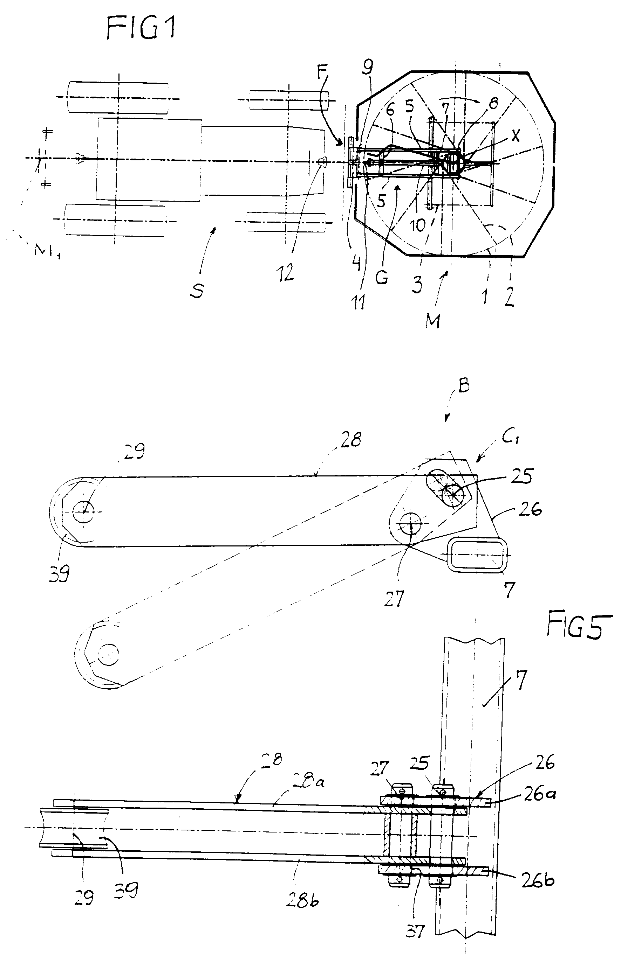

- Fig. 1: eine Schemadraufsicht auf einen Schlepper mit frontseitig angebauter Heuwerbungsmaschine, in der Arbeitslage,
- Fig. 2: eine Seitenansicht zu Fig. 1,
- Fig. 3: eine Seitenansicht bei in Arbeitslage am Vorderende nach oben angestellter Maschine,
- Fig. 4: eine Seitenansicht, in Transportlage,
- Fig. 5: eine Seitenansicht und eine zugehörige Draufsicht eines Details, und
- Fig. 6: eine Seitenansicht, teilweise im Schnitt, eines weiteren Details.

Eine Heuwerbungsmaschine M, z.B. ein Kreiselschwader, ist an einer Dreipunkt-Fronthalterung F eines Schleppers S angebaut. Die Dreipunkt-Fronthalterung F ist mittels der Schlepperhydraulik auf übliche Weise verstellbar, z.B. entlang des strichpunktierten Kreisbogens. Die Maschine M besitzt einen um eine in etwa vertikale Drehachse X zur Drehung antreibbaren Werkzeugkreisel 1, z.B. mit gesteuerten Zinken, die an Speichen 2 gehaltert sind. Die Maschine M stützt sich über ein Fahrwerk 3 auf dem Boden ab. Die Maschine M wird mit einem Tragrahmen G und einem Anbaurahmen 4 an der Fronthalterung F festgelegt. Der Tragrahmen G weist zwei annähernd parallele, beabstandete Holme 5 und hintere und vordere Querverstrebungen 6, 7 auf. Die Maschine M ist am Tragrahmen G um eine quer zur Arbeitsfahrtrichtung und etwa horizontal liegende Maschinenachse 8 schwenkbar. Der Tragrahmen G ist um eine zur Maschinenachse 8 parallele Querachse 9 am Anbaurahmen 4 schwenkbar. Die Maschine M weist einen maschinenfesten Teil 10, z.B. ein Rohr für eine Antriebswelle 11, auf, der sich von einem Getriebegehäuse 16 in Richtung zu einem Zapfwellenanschluß 12 des Schleppers S erstreckt und in etwa mittig zwischen den Gestellholmen 5 liegt. Zum Anschluß der Antriebswelle 11 wird eine strichpunktiert dargestellte Zwischenwelle benutzt.

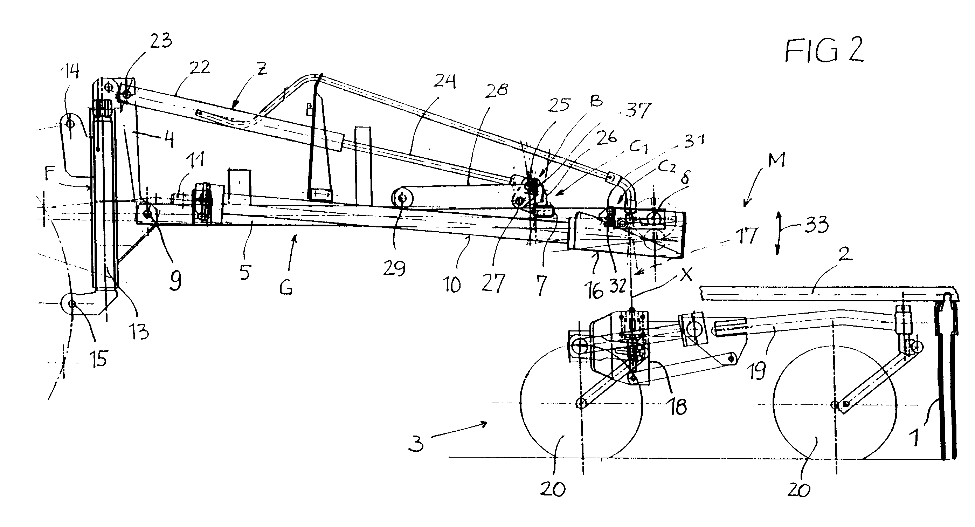

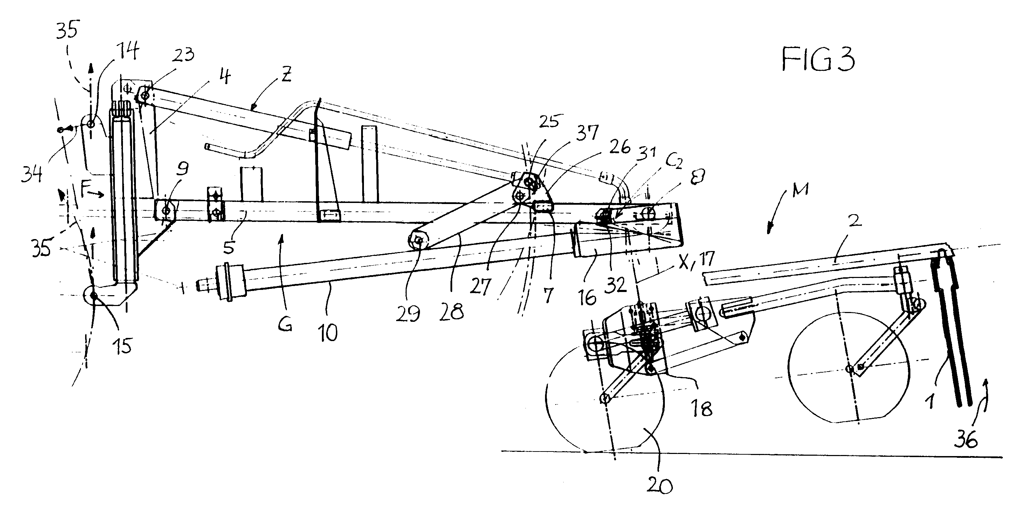

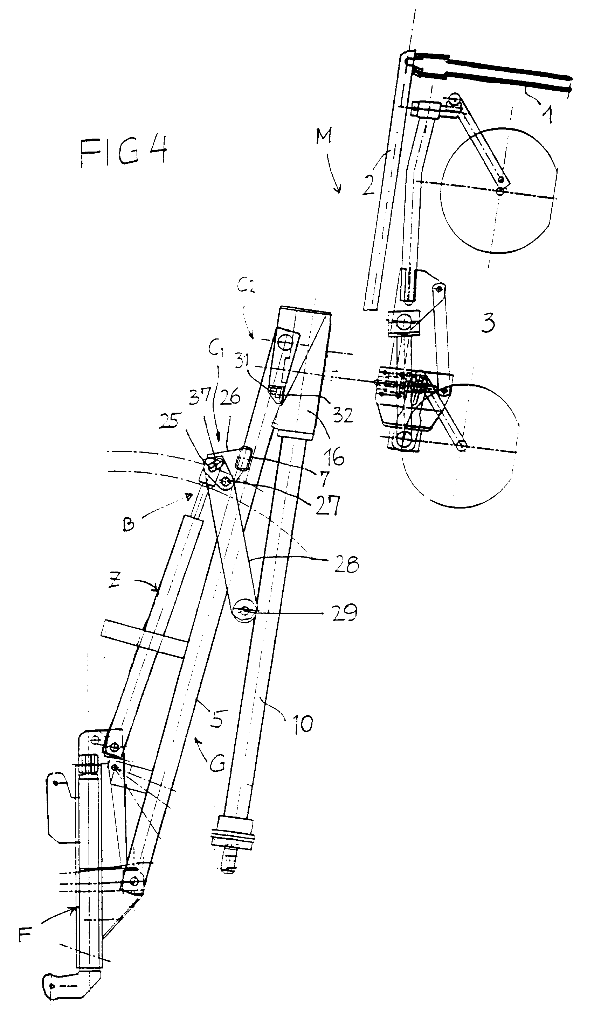

Wird die Maschine M vom Schlepper S in der Arbeitslage auf dem drei oder mehr Räder aufweisenden Fahrwerk 3 geschoben, dann führt sie relativ zum Schlepper zur Bodenanpassung Eigenbewegungen aus, wobei sie in Fahrtrichtung vom Tragrahmen G geführt wird (Fig. 2). Ferner läßt sich die Maschine M zusammen mit dem Tragrahmen G in die Transportlage hochschwenken (Fig. 4). Schließlich ist die Maschine M, z.B. am Feldrand, mit der in Fahrtrichtung vorneliegenden Seite um die Maschinenachse 8 relativ zum Maschinengestell G anstellbar (Fig. 3).

Fig. 2 verdeutlicht die Arbeitslage der Maschine M. Die Räder 20 sind an einem Fahrgestell 19 angebracht. Die Drehachse X steht im wesentlichen senkrecht zum Boden.

In der Fronthalterung F ist ein Dreiecksrahmen 13 mit oberen und untere Anlenkpunkten 14, 15 verstellbar. In etwa in der Höhenmitte zwischen den oberen und unteren Anlenkpunkten 14, 15 ist der Tragrahmen G mit seinen Holmen 5 um die Querachse 9 schwenkbar am Anbaurahmen 4 gehaltert. Der maschinenfeste Teil 10 liegt in etwa in der Ebene der Holme 5. Das Getriebegehäuse 16 ist um die Maschinenachse 8 schwenkbar an den Holmen 5 gelagert. Mit 17 ist eine Zinkensteuervorrichtung zwischen einem Antriebsteil 18 im Fahrwerk 3 und dem Getriebegehäuse 16 nur symbolisch angedeutet.

Oberhalb der Querachse 9 und des oberen Anlenkpunktes 14 und näher am Schlepper als die Querachse 9 ist am Anbaurahmen 4 ein Anlenkpunkt 23 für ein Zugelement in Form eines Arbeitszylinders Z vorgesehen, der aus einem Zylinderteil 22 und einer ausfahrbaren Kolbenstange 24 besteht. Der Arbeitszylinder Z ist in einem Anlenkpunkt 25 mit einem Zwangsschwenkmechanismus B verbunden, der auf den Holmen 5 und/oder der Querstrebe 7 angeordnet ist. Im Zwangsschwenkmechanismus B ist ein erster Schwenkbegrenzer C1 vorgesehen. Zwischen dem Tragrahmen G und dem Getriebegehäuse 16 ist ein zweiter Schwenkbegrenzer C2 vorgesehen.

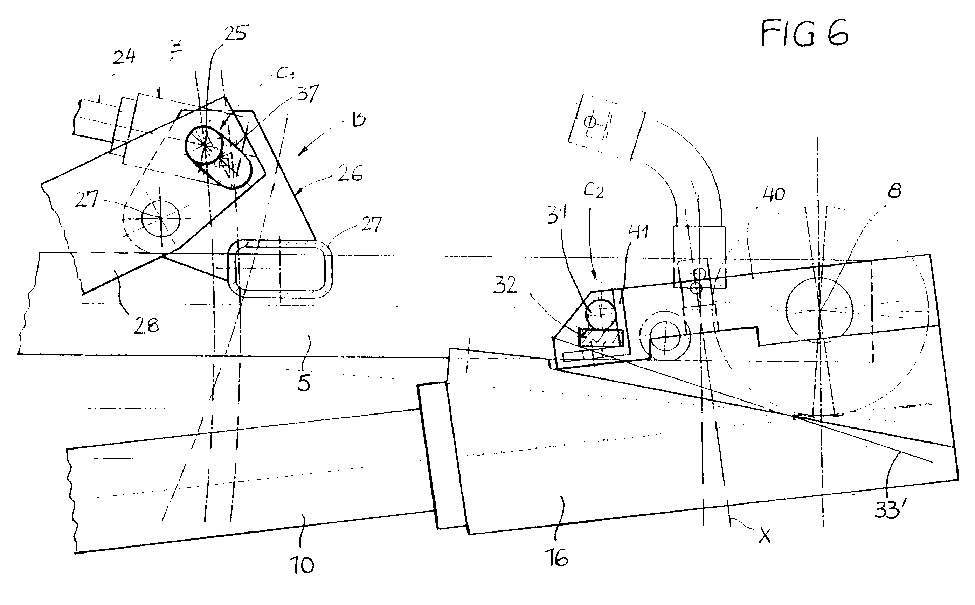

Der Anlenkpunkt 25 für den Arbeitszylinder Z ist ein querdurchgehender Kuppelbolzen, der zwei parallele, aufrechtstehende Stützlaschen 26 (Fig. 5 und 6) in Führungskulissen 37 durchsetzt. Zwischen und in den Stützlaschen 26 ist ein zweiarmiger Hebel 28 um eine Achse 27 schwenkbar gelagert, die von einem in den Stützlaschen 26, 26a, 26b gehaltenen Bolzen gebildet wird. Der den Anlenkpunkt 25 bildende Kuppelbolzen sitzt spielfrei und schwenkbar im einen Ende des zweiarmigen Hebels 28. Das andere Ende des zweiarmigen Hebels 28 beaufschlagt bei 29 den maschinenfesten Teil 10, und zwar entweder mit einer Druckrolle 39 von oben,oder über eine Langloch- oder Schlitzführung (nicht gezeigt).

Am Getriebegehäuse 16 ist (zweckmäßigerweise pro Seite) ein Anschlag 31 angebracht, der in seinem Schwenkweg auf einen am Tragrahmen G angebrachten Gegenanschlag 32 ausgerichtet ist, und zwar in Schwenkrichtung entgegen dem Uhrzeigersinn in Fig. 2. Die Führungskulissen 37 in den Stützlaschen 26, 26a, 26b sind zur Achse 27 konzentrische Langlöcher. Die Führungskulissen 37 und der Abstand zwischen dem Anschlag 31 und dem Gegenanschlag 32 sind so aufeinander abgestimmt, daß der den Anlenkpunkt 25 bildende Kuppelbolzen am oberen Ende der Führungskulissen 37, die schräg zur Zugrichtung des Arbeitszylinders Z ausgerichtet sind, dann zur Anlage kommt, wenn auch der Anschlag 31 auf den Gegenanschlag 32 trifft.

In der Arbeitslage gemäß Fig. 2 vermag die Maschine M relativ zur Fronthalterung Arbeitsbewegungen in Richtung eines Doppelpfeiles 33 auszuführen, gegebenenfalls mit Auf- und Abschwenkbewegungen des Tragrahmens G, ohne daß der den Anlenkpunkt 25 bildende Kuppelbolzen in den Führungskulissen oder die Anschläge und Gegenanschläge 31, 32 wirksam werden.

Der zwischen der Achse 27 und dem Anlenkpunkt 29 am maschinenfesten Teil 10 vorliegende Hebelarm des zweiarmigen Hebels 28 ist erheblich größer als der Hebelarm zwischen der Achse 27 und dem Anlenkpunkt 25. Die Drehachse X befindet sich zwischen der Maschinenachse 8 und der Achse 27, und zwar näher bei der Maschinenachse 8. Der Anlenkpunkt 29 liegt an der der Maschinenachse 8 abgewandten Seite der Achse 27.

Gemäß den Fig. 5 und 6 ist der zweiarmige Hebel 28 aus zwei Hebelteilen 28a, 28b zusammengesetzt, die durch ein Distanzelement 38 auf der Achse 27 in Abstand gehalten sind und die Druckrolle 39 zwischen sich einschließen, die den Beaufschlagungspunkt 29 definiert, der längs des Teils 10 wandern kann.

Der zweite Schwenkbegrenzer C2 ist aus Fig. 6 zu entnehmen. Der Anschlag 31 wird von einem querliegenden Zapfen an einem Arm 40 des Getriebegehäuses 16 gebildet (pro Seite), und ist mit dem Getriebegehäuse 16 mitschwenkbar verbunden. Der Gegenanschlag 32 wird, z.B., von einem an einem Holm 5 angeschweißten Flacheisen gebildet, das unter den Anschlag 31 greift. In Fig. 6 ist das Getriebegehäuse 16 wie in Fig. 3 relativ zu den Holmen 5 um die Maschinenachse 8 im Uhrzeigersinn verschwenkt. Der Anschlag 31 liegt auf dem Gegenanschlag 32 auf. Der Anlenkpunkt 25 ist im oberen Ende der Führungskulissen 37 abgefangen. Dies entspricht unter anderem der Relativposition zwischen den Komponenten bei einer vorderseitigen Anstellung gemäß Fig. 3 oder in der Transportstellung gemäß Fig. 4. Die in Fig. 6 bei 33' angedeutete Linie entspricht einer Stellung, die die Maschine relativ zum Tragrahmen G bei Bodenanpassungsbewegungen in der Arbeitslage ohne Beschränkung einzunehmen vermag.

Fig. 3 verdeutlicht die Anstellung der Maschine M, wie sie beispielsweise am Feldrand zweckmäßig ist, um das Kratzen oder Eingraben der Werkzeuge am Vorderende der Maschine zu verhindern. Entweder durch Beaufschlagung des Arbeitszylinders Z oder/und durch eine Verstellung der Fronthalterung F in Richtung eines Pfeils 34 oder in Richtung eines Pfeils 35 ist auf den Anlenkpunkt 25 eine Zugwirkung ausgeübt. Dadurch wird der Anlenkpunkt 25 bzw. der diesen definierende Kuppelbolzen am Ende des Arbeitszylinders Z in den Führungskulissen 37 bis zum Anschlag nach oben verlagert. Der Hebel 28 führt um die Achse 27 eine Drehbewegung entgegen dem Uhrzeigersinn am Tragrahmen G aus, wodurch der Anlenkpunkt 29 nach unten versetzt wird. Der maschinenfeste Teil 10 schwenkt mit dem Getriebegehäuse 16 um die Maschinenachse 8 entgegen dem Uhrzeigersinn, und zwar auf dem oder den hinteren Laufrad bzw. Laufrädern 20.

Diese Stellung kann - wie gesagt - sowohl mittels des Arbeitszylinders Z als auch mittels der Fronthalterung F eingestellt werden. Wird die Fronthalterung F dafür verwendet, dann ist entweder der Arbeitszylinder Z bis auf Anschlag ausgezogen oder hydraulisch oder auf andere Weise blockiert, damit er die Anhebebewegung der Fronthalterung oder deren Kippbewegung auf den Anlenkpunkt 25 überträgt.

Zum darauffolgenden, normalen Arbeiten der Maschine wird die Fronthalterung F wieder in die Ausgangsstellung zurückbewegt bzw. der Arbeitszylinder Z freigegeben (Schwimmstellung).

Soll die Maschine M aus der Stellung gemäß Fig. 3 in die Transportstellung (Fig. 4) geführt werden, dann wird der Arbeitszylinder Z eingefahren (über die Schlepperhydraulik) bis der Tragrahmen G mit den Holmen 5 und die Maschine M in die Position von Fig. 4 gelangt sind. In der Transportlage gemäß Fig.4 ist durch die Zugwirkung des Arbeitszylinders Z und die Wirkung der beiden Begrenzer C1 und C2 die Maschine relativ zum Tragrahmen G verblockt, so daß die Maschine M keine Schwing- oder Pendelbewegungen auszuführen vermag.

Der Zwangsschwenkmechanismus B der Fig. 2 bis 6 könnte dahingehend modifiziert sein, daß der zweiarmige Hebel 28 an seinem unteren Ende mit dem Arbeitzylinder Z oder einem Zugelement verbunden ist, während des obere Ende des Hebels 28 über ein Zwischenglied am maschinenfesten Teil 10 angreift. Dadurch könnte eine steilere Lage des Arbeitszylinders Z erreicht werden, die gegebenenfalls eine andere, wünschenswerte Kinematik beim Anstellen erbringt. Anstelle eines geraden, zweiarmigen Hebels könnte auch ein Winkelhebel verwendet werden, entsprechend der Versetzung zwischen den Punkten 25, 29 und der Achse 27. Eine weitere Möglichkeit besteht darin, anstelle des Hebels 28 einen Kniehebelmechanismus vorzusehen, der am Maschinengestell angebracht und über das Kniegelenk auf den maschinenfesten Teil drückt. In der Arbeitslage ist der Kniehebelmechanismus im wesentlichen durchgestreckt. Unter dem Zug des Arbeitszylinders wird der Kniehebelmechanismus zusammengefaltet, wobei das Kniegelenk den maschinenfesten Teil relativ zum Maschinengestell nach unten wegdrückt.

Das erläuterte Prinzip, den Arbeitszylinder am Tragrahmen unter Zwischenschaltung eines Bewegungsspiels angreifen zu lassen, mit dem Anlenkpunkt des Arbeitszylinders einen Zwangsschwenkmechanismus für die Maschine zu koppeln, und das Bewegungsspiel unter Zugwirkung des Arbeitszylinders zunächst aufzuzehren und daraus eine Verschwenkbewegung der Maschine relativ zum Tragrahmen abzuleiten, ehe der Tragrahmen angehoben wird, wurde nur beispielsweise anhand eines Kreiselschwaders für Frontanbau erläutert. Dieses Prinzip ist aber auch für andere landwirtschaftliche Maschinen brauchbar, bei denen unter bestimmten Betriebsbedingungen eine frontseitige (oder heckseitige) zügige Anstellbewegung der Maschine günstig ist.

Am Schlepper S kann heckseitig eine weitere, ähnliche Heuwerbungsmaschine M1 angebracht sein (Kreiselschwader) die seitlich arbeitet und mit der Maschine M kooperiert.

## Patentansprüche

1. Heuwerbungsmaschine, insbesondere Kreiselschwader, für Frontanbau, mit einem Maschinengestell, an dem ein Laufräder-Fahrwerk und wenigstens ein drehantreibbarer Werkzeugkreisel vorgesehen sind, mit einem die Maschine führenden Tragrahmen, der um eine bodenparallele Querachse an einer Dreipunkt-Fronthalterung eines Schleppers aus einer abgesenkten Arbeitslage mittels eines Zugelements hochschwenkbar ist, und mit wenigstens einer zur Querachse parallelen Maschinenachse zwischen dem freien Ende des Tragrahmens und der Maschine, um die die Maschine relativ zum Tragrahmen begrenzt schwenkbar ist, **dadurch gekennzeichnet**, daß zwischen dem Tragrahmen (G) und der Maschine (M) ein mittels des Zugelements (Z) betätigbarer, formschlüssiger Zwangsschwenkmechanismus (B) vorgesehen ist, mit dem die Maschine (M) in Fahrtrichtung vorne relativ zum Tragrahmen (G) um die Maschinenachse (8) nach oben anstellbar ist.

2. Heuwerbungsmaschine nach Anspruch 1, **dadurch gekennzeichnet**, daß das Zugelement (Z) über den Zwangsschwenkmechanismus (B) am Tragrahmen (G) angeschlossen ist, daß im Zwangsschwenkmechanismus (B) ein begrenztes Bewegungsspiel zwischen einem Anlenkpunkt (25) des Zugelements (Z) und dem Tragrahmen (G) vorgesehen ist, und daß mit dem Zwangsschwenkmechanismus (B) ein dem Bewegungsspiel proportionaler Schwenkhub auf die Maschine (M) übertragbar ist.

3. Heuwerbungsmaschine nach den Ansprüchen 1 und 2, **dadurch gekennzeichnet**, daß die Maschine (M) über den Zwangsschwenkmechanismus (B) durch eine Hochstellbewegung der Dreipunkt-Fronthalterung (F) des Schleppers (S) anstellbar ist.

4. Heuwerbungsmaschine nach den Ansprüchen 1 und 2, **dadurch gekennzeichnet**, daß das Zugelement (Z) ein zwischen einem Anbaurahmen (4) des Tragrahmens (G) und dem Zwangsschwenkmechanismus (B) vorgesehener Arbeitszylinder ist, und daß die Maschine (M) über den Zwangsschwenkmechanismus (B) durch eine Zugbewegung des Arbeitszylinders anstellbar ist.

5. Heuwerbungsmaschine nach den Ansprüchen 1 bis 4, **dadurch gekennzeichnet**, daß die Maschine (M) bei blockiertem oder auf Anschlag ausgezogenem Arbeitszylinder über den Zwangsschwenkmechanismus (B) durch eine Hochstellbewegung der Dreipunkt-Fronthalterung (F) des Schleppers (S) anstellbar ist.

6. Heuwerbungsmaschine nach wenigstens einem der Ansprüche 1 bis 5, **dadurch gekennzeichnet**, daß der Zwangsschwenkmechanismus (B) einen zweiarmigen Hebel (28) aufweist, daß das Zugelement (Z) an einem Ende des zweiarmigen Hebels (28) angelenkt (bei 25) ist, mit dessen anderem Ende ein maschinenfester Teil (10) in Schwenkrichtung in einem Beaufschlagungspunkt (29) beaufschlagbar ist, und daß der zweiarmige Hebel (28) zwischen seinen Enden am Tragrahmen (G) um eine zur Maschinenachse (8) parallele Achse (27) schwenkbar gelagert ist.

7. Heuwerbungsmaschine nach Anspruch 6, **dadurch gekennzeichnet**, daß der Anlenkpunkt (25) zwischen dem Zugelement (Z) und dem Hebel (28) am Tragrahmen (G) innerhalb des Bewegungsspiels (Schwenkbegrenzer C1) begrenzt beweglich geführt ist, und daß für die Maschine (M) benachbart zur Maschinenachse (8) zwischen dem Tragrahmen (G) und der Maschine (M) ein weiterer Schwenkbegrenzer (C2) vorgesehen ist.

8. Heuwerbungsmaschine nach Anspruch 6, **dadurch gekennzeichnet**, daß der Hebelarm des Hebels (28) zwischen seiner Achse (27) am Tragrahmen (G) und dem Anlenkpunkt (25) kürzer als der Hebelarm zwischen der Achse (27) und dem Beaufschlagungspunkt (29) ist, derart, daß das Bewegungsspiel des Anlenkpunktes (25) in einen größeren Schwenkhub des Beaufschlagungspunktes (29) übersetzt wird.

9. Heuwerbungsmaschine nach wenigstens einem der Ansprüche 1 bis 8, **dadurch gekennzeichnet**, daß der Tragrahmen (G) zwei annähernd parallele Holme (5, 5a, 5b) aufweist, an denen an der Maschinenachse (8) ein Getriebegehäuse (16) der Maschine (M) abgestützt ist, daß am Tragrahmen (G), vorzugsweise an den Holmen (5, 5a, 5b) und/oder an einer Querstrebe (7), zwischen der Maschinenachse (8) und der Querachse (9) wenigstens eine Stützlasche (26) für die Achse (27) des Hebels (28) festgelegt ist, und daß die Stützlasche (26) eine zur Achse (27) konzentrische, das Bewegungsspiel begrenzende Führungskulisse (37) aufweist, in die ein den Anlenkpunkt (25) des Zugelements am Hebel (28) bildender Kuppelbolzen eingreift.

10. Heuwerbungsmaschine nach Anspruch 9, **dadurch gekennzeichnet**, daß die Führungskulisse (37) ein bogenförmiges Langloch ist, das sich in etwa in Zugrichtung des Zugelementes (Z) erstreckt.

11. Heuwerbungsmaschine nach den Ansprüchen 9 und 10, **dadurch gekennzeichnet**, daß zwei parallele, beabstandete Stützlaschen (26a, 26b) für die Achse (27) vorgesehen sind, daß der Hebel (28) aus zwei gleichen beabstandeten, parallelen Hebelteilen (28a, 28b) besteht, die zwischen die Stützlaschen (26a, 26b) eingreifen und den durch die Führungskulissen (37) nach außen reichenden, den Anlenkpunkt (25) des Zylinders (Z) bildenden Kuppelbolzen lagern, daß der Arbeitszylinder (Z) zwischen den Hebelteilen (28a, 28b) am Kuppelbolzen angelenkt ist, und daß am Beaufschlagungspunkt (29) des Hebels (28) am maschinenfesten Teil (10) entweder zwischen den Hebelteilen (28a, 28b) eine Druckrolle (39) gehalten ist, die von oben auf den maschinenfesten Teil (10) aufdrückbar ist, oder daß der Beaufschlagungspunkt (29) am maschinenfesten Teil (10) längsbeweglich geführt ist.

12. Heuwerbungsmaschine nach wenigstens einem der vorhergehenden Ansprüche, **dadurch gekennzeichnet**, daß der maschinenfeste Teil (10) ein mit dem Getriebegehäuse (16) verbundenes Rohr, z.B. für eine Antriebswelle (11), ist.

13. Heuwerbungsmaschine nach wenigstens einem der Ansprüche 1 bis 12, **dadurch gekennzeichnet**, daß am Tragrahmen (G) in Arbeitsfahrtrichtung der Maschine (M) die Maschinenachse vor und der Zwangsschwenkmechanismus (B) hinter einer Drehachse (X) des am Getriebegehäuses (16) drehbaren Werkzeugkreisels (1) angeordnet sind, vorzugsweise derart, daß der Abstand zwischen der Drehachse (X) und der Maschinenachse (8) erheblich kürzer als der Abstand zwischen der Drehachse (X) und dem Zwangsschwenkmechanismus (B) ist, und daß der Beaufschlagungspunkt (29) am maschinenfesten Teil (10) an der der Drehachse (X) abgewandten Seite des Zwangsschwenkmechanismus (B) liegt.

14. Heuwerbungsmaschine nach wenigstens einem der vorhergehenden Ansprüche, **dadurch gekennzeichnet**, daß der unterhalb des Tragrahmens (G) liegende Schwerpunkt der Maschine (M) zwischen der Maschinenachse (8) und dem Beaufschlagungspunkt (29) angeordnet ist.

15. Heuwerbungsmaschine nach wenigstens einem der vorhergehenden Ansprüche, **dadurch gekennzeichnet**, daß im Getriebegehäuse (16) wenigstens ein Anschlag (31) vorgesehen und auf einen in Schwenkrichtung der Maschine (M) zum Anstellen der Maschinenvorderseite relativ zum Tragrahmen (G) mit einem vorbestimmten Abstand am Tragrahmen (G) angeordneten Gegenanschlag (32) ausgerichtet ist.

16. Heuwerbungsmaschine nach Anspruch 15, **dadurch gekennzeichnet**, daß der Anschlag (31) ein an einem von der Maschinenachse (8) in Richtung zum Schwenkmechanismus (B) ragenden Arm (40) angebrachter Querzapfen ist, in dessen Bewegungsweg der als Querfortsatz eines Holms (5, 5a, 5b) ausgebildeter Gegenanschlag von unten eingreift.

17. Heuwerbungsmaschine nach wenigstens einem der vorhergehenden Ansprüche, **dadurch gekennzeichnet**, daß der vorherbestimmte Abstand zwischen dem Anschlag (31) und dem Gegenanschlag (32) mit dem Bewegungsweg des den Anlenkpunkt (25) des Arbeitszylinders (Z) bildenden Kuppelzapfens in den Führungskulissen (37) korrespondiert, derart, daß der Anschlag (31) und der Kuppelzapfen beim Anstellen der Maschine (M) relativ zum Tragrahmen (G) in etwa gleichzeitig abfangbar sind.

18. Heuwerbungsmaschine nach wenigstens einem der Ansprüche 1 bis 17, **dadurch gekennzeichnet**, daß die Maschine (M) in angehobener Transportlage über den Zwangsschwenkmechanismus (B) relativ zum Tragrahmen (G) verblockbar ist.
